# EUROPÄISCHE PATENTSCHRIFT

(11) **EP 2 229 646 B1**
(45) Veröffentlichungstag und Bekanntmachung des Hinweises auf die Patenterteilung: **06.07.2016**
(21) Anmeldenummer: 08870474.7
(22) Anmeldetag: 18.12.2008
(51) Int. Cl.: G06F 21/52, G06F 21/64, G06F 21/55

(54) **SOFTWAREIDENTIFIKATION**
SOFTWARE IDENTIFICATION
IDENTIFICATION D'UN LOGICIEL

(30) Priorität: 08.01.2008 DE 102008003531
(43) Veröffentlichungstag der Anmeldung: 22.09.2010
(73) Patentinhaber: Giesecke & Devrient GmbH, 81677 München (DE)
(72) Erfinder: WACKER, Dirk, 81371 München (DE); MEISTER, Gisela, 81737 München (DE)
(74) Vertreter: Bornhäuser, Frank
(86) Internationale Anmeldenummer: PCT/EP2008/010847
(87) Internationale Veröffentlichungsnummer: WO 2009/086896

(56) Entgegenhaltungen:
- WO-A-2006/028558
- DE-A1-102004 002 419
- DE-A1-102006 016 994
- US-A1- 2002 124 178
- US-A1- 2007 182 421
- DHEM J-F ET AL: "A practical implementation of the timing attack" SMART CARD RESEARCH AND APPLICATIONS. INTERNATIONAL CONFERENCE, XX, XX, 16. September 1998 (1998-09-16), Seite 18, XP002265542
- Yuqun Chen ET AL: "Oblivious Hashing: A Stealthy Software Integrity Verification Primitive" In: "Information Hiding", 1 January 2003 (2003-01-01), Springer Berlin Heidelberg, Berlin, Heidelberg, XP055044104, ISBN: 978-3-54-000421-9 vol. 2578, pages 400-414, DOI: 10.1007/3-540-36415-3_26,
- FRANCK VEYSSET ET AL: 'New Tool And Technique For Remote Operating System Fingerprinting - Full Paper -' CRACKING8HACKING.COM, [Online] 01 April 2002, Seiten 1 - 13, XP055125291 Gefunden im Internet: <URL:http://cracking8hacking.com/cracking-h acking/Ebooks/Misc/pdf/remote_os_detection. pdf> [gefunden am 2014-06-26]

## Beschreibung

Die vorliegende Erfindung betrifft ein Verfahren zur Echtheitsprüfung einer auf einem portablen Datenträger gespeicherten Software sowie einen derartigen Datenträger und eine Prüfvorrichtung.

Portable Datenträger, z.B. Chipkarten, mit einem Prozessor und einem Speicher, in dem auf dem Prozessor ausführbare Softwareapplikationen gespeichert sind, sind in vielfältigen Anwendungsgebieten bekannt, beispielsweise im bargeldlosen Zahlungsverkehr, im Mobilfunk, zur Authentisierung und dergleichen. Die Hersteller dieser Software haben ein Interesse, dass die Software nicht von Dritten unberechtigt vervielfältigt und auf Datenträgern gespeichert in Umlauf gebracht wird. Neben dem wirtschaftlichen Schaden, den ein solches Vervielfältigen für den Hersteller der Software bedeutet, sind auch Sicherheitsbelange betroffen. Z.B. ist die Sicherheit von Systemen, deren Zugang über vorstehend beschriebene Datenträger gesteuert wird, gefährdet, da diese Systeme mittels gefälschter Datenträger z.B. widerrechtlich betreten bzw. ausgespäht werden können.

Eine unberechtigte Vervielfältigung der Software ist im Allgemeinen schwer zu verhindern. Desgleichen ist es für den Softwarehersteller in der Regel sehr aufwendig, einerseits zu ermitteln, ob eine auf einem tragbaren Datenträger gespeicherte Software tatsächlich eine von diesem Hersteller produzierte Software ist, und andererseits, falls sich ein entsprechender Verdacht erhärtet, einen beweiskräftigen Nachweis darüber zu führen.

In US 2007/0182421 A1 detektiert eine Karte DFA-Angriffe auf die Karte durch Überwachung ihres eigenen Stromverbrauchs. WO 2006/028558A1 beschreibt eine Vorrichtung, die auf ihr selbst laufende Software anhand des Stromverbrauches als unerwünschte Software erkennt.

Der Artikel "Oblivious Hashing" von Chen et al. schlägt vor, für Programmcode den tatsächlich ausgeführten Programmablauf zu erfassen (execution trace) und einen Hashwert hierüber zu verwenden, um nachzuweisen, dass der Programmcode unverändert abgelaufen ist. Gemäß dem Artikel "New Tool And Technique For Remote Operating System Fingerprinting" von Veysset et al. können PC-Betriebssysteme anhand eines Zeitabstandes zwischen ACK-Nachrichten in einer TCP/IP-Kommunikation mit dem PC erkannt werden.

In der DE 10 2004 002 419 A1 ist ein Verfahren zur Echtheitsprüfung einer Software offenbart, die auf einem tragbaren Datenträger gespeichert ist. Dabei wird ein Bestandteil der gespeicherten Software als eine potentielle Kennung des Softwareherstellers herangezogen. Auf Basis dieses Kennung wird ein Code erzeugt und ausgegeben, mit dessen Hilfe eine Information über den Softwarehersteller ermittelt wird. Die Kennung kann auf Basis von Herstellerangaben bezüglich der Software gebildet und kryptographisch gesichert werden.

Es ist die Aufgabe der vorliegenden Erfindung, Mittel bereitzustellen, mittels derer eine Verbreitung missbräuchlich vervielfältigter und auf tragbaren Datenträgern gespeicherter Software zuverlässig erkannt werden kann.

Diese Aufgabe wird durch den Gegenstand der unabhängigen Ansprüche gelöst. Vorteilhafte Ausgestaltungen und Weiterbildungen sind in den abhängigen Ansprüchen angegeben.

Die Erfindung basiert darauf, eine Echtheit einer auf einem portablen Datenträger gespeicherten Softwareapplikation anhand des Ressourcenverbrauchs eines der Softwareapplikation entsprechenden Applikationsprozesses, der auf einem Prozessor des Datenträgers ausgeführt wird, zu prüfen.

Demnach wird bei einem Verfahren zur Echtheitsprüfung einer auf einem portablen Datenträger gespeicherten Softwareapplikation die Softwareapplikation als Applikationsprozess auf einem Prozessor des Datenträgers ausgeführt. Erfindungsgemäß wird zumindest ein Messwert bestimmt, der einen Ressourcenverbrauch dieses Applikationsprozesses bei der Ausführung der Softwareapplikation durch den Datenträger betrifft, und der zumindest eine Messwert wird ausgewertet.

Die Echtheitsprüfung einer Softwareapplikation auf dem Datenträger kann durch eine externe Prüfvorrichtung oder durch eine Prüfeinrichtung auf dem Datenträger selbst vorgenommen werden. Bei einer ersten bevorzugten Ausführungsform umfasst ein erfindungsgemäßer Datenträger einen Prozessor, einen nichtflüchtigen Speicher, die in dem Speicher gespeicherte und auf dem Prozessor als Applikationsprozess ausführbare, zu prüfende Softwareapplikation sowie eine eigene Prüfeinrichtung, die eingerichtet ist, zumindest einen Messwert zu bestimmen, welcher den Ressourcenverbrauch des Applikationsprozesses bei der Ausführung der Softwareapplikation auf dem Prozessor betrifft, und den zumindest einen Messwert auszuwerten.

Eine erfindungsgemäße Prüfvorrichtung zur Prüfung eines mit der Prüfvorrichtung verbindbaren Datenträgers umfasst eine Kommunikationsschnittstelle zur Datenkommunikation mit dem Datenträger und eine Steuerapplikation zum Starten der auf dem Datenträger gespeicherten, zu prüfenden Softwareapplikation als einen auf einem Prozessor des Datenträgers ausgeführten Applikationsprozess. Erfindungsgemäß ist die Prüfvorrichtung eingerichtet, zumindest einen Messwert zu bestimmen, welcher den Ressourcenverbrauch des Applikationsprozesses bei der Ausführung der Softwareapplikation betrifft, und den zumindest einen Messwert auszuwerten.

Im Rahmen der vorliegenden Erfindung ist unter einer Softwareapplikation sowohl eine Betriebssystemsoftware oder Komponenten davon als auch Anwendungssoftware zu verstehen. Die Softwareapplikation kann mehrere Komponenten umfassen und derart ausgebildet sein, dass beim Ausführen der Softwareapplikation oder einer oder mehrerer ihrer Komponenten mehrere Applikationsprozesse entstehen, die z.B. nebenläufig ausgeführt werden, beispielsweise wenn die Softwareapplikation ein multithreading-fähiges Betriebssystem darstellt. Ein Applikationsprozess kann auch einen oder mehrere abhängige weitere Applikationsprozesse erzeugen. Die bestimmten Messwerte können dann einen Ressourcenverbrauch eines oder mehrerer der entsprechenden nebenläufigen und/oder abhängigen Applikationsprozesse betreffen. Im Folgenden wird der besseren Lesbarkeit halber stets von einem Applikationsprozess gesprochen, wobei - wie vorstehend beschrieben - einer oder mehrere entsprechende Applikationsprozesse gemeint sein können.

Durch ein geeignetes Auswerten des zumindest einen den Ressourcenverbrauch des Applikationsprozesses betreffenden Messwertes kann die entsprechende Softwareapplikation identifiziert und dadurch auf Echtheit geprüft werden. Missbräuchlich vervielfältigte Software kann mittels des erfindungsgemäßen Verfahrens, unter Benutzung der Prüfeinrichtung auf dem Datenträger selbst oder unter Benutzung der externen Prüfvorrichtung, einfach und nachweisbar erkannt werden und die Verbreitung von Datenträgern, auf denen diese Software unerlaubt gespeichert ist, kann effektiv verhindert werden.

Vorzugsweise wird beim Auswerten der zumindest eine Messwert mit zumindest einem Referenzwert verglichen. Die Echtheit der Softwareapplikation gilt als nachgewiesen, wenn der zumindest eine Messwert und der zumindest eine Referenzwert im Wesentlichen übereinstimmen, d.h. der Messwert innerhalb eines vorgegebenen Toleranzbereichs des Referenzwerts liegt.

Die Erfindung kann also einerseits zum "positiven" Prüfen der Echtheit eines Datenträgers, z.B. eines elektronischen Reisepasses, verwendet werden. Dabei werden Referenzwerte, die einen Ressourcenverbrauch von auf einem Prozessor des Reisepasses ausführbaren Softwareapplikationen betreffen, beispielsweise bei Grenzbehörden gespeichert. Beim einem Grenzübertritt können dann die bezüglich eines vorgelegten Reisepasses bestimmten und ausgewerteten Messwerte mit den Referenzwerten, die für Reisepässe des entsprechenden Landes bei den Grenzbehörden gespeichert sind, verglichen werden, um eine Echtheitsprüfung des elektronischen Reisepasses durchzuführen. Weichen die Messwerte von den gespeicherten Referenzwerten zu stark ab, so handelt es sich bei dem vorgelegten Reisepass um eine Fälschung. Andererseits kann ein "negatives" Prüfen von Echtheit in der Weise erfolgen, dass eine auf einem Datenträger gespeicherte Software, die im Verdacht steht, eine widerrechtlich in Umlauf gebrachte Kopie einer Referenzsoftware zu sein, geprüft wird. Wird in diesem Fall Echtheit gemäß der Erfindung festgestellt - dadurch, dass der zumindest eine Messwert, der den Ressourcenverbrauch des der Software entsprechenden Applikationsprozesses betrifft, mit dem die Referenzsoftware betreffenden Referenzwert übereinstimmt - so bedeutet dies, dass die Software eine missbräuchlich hergestellte Kopie der Referenzsoftware ist und insofern echt ist. Verfügt schließlich ein Datenträger über eine eigene Prüfeinrichtung, beispielsweise als Komponente des Betriebssystemkerns, so kann diese prüfen, ob auf dem Datenträger fremde Softwareapplikationen gespeichert sind.

Die Prüfeinrichtung des Datenträgers ist dementsprechend eingerichtet, den zumindest einen Messwert mit zumindest einem in dem Speicher des Datenträgers gespeicherten Referenzwert zu vergleichen, um eine Echtheit der Softwareapplikation in der vorstehend beschriebenen Weise nachzuweisen oder zu widerlegen. Analoges gilt für die externe Prüfvorrichtung.

Der zumindest eine Messwert kann den Ressourcenverbrauch des Applikationsprozesses bezüglich verschiedener Ressourcen betreffen. Eingeschlossen sind dabei insbesondere das Laufzeitverhalten des Applikationsprozesses und der Stromverbrauch des Datenträgers aufgrund des ausgeführten Applikationsprozesses. Im Rahmen der vorliegenden Erfindung umfasst das Laufzeitverhalten des Applikationsprozesses insbesondere den Speicherbedarf des Applikationsprozesses und die Laufzeit des Applikationsprozesses. Dabei kann jeder bestimmte Messwert als Gesamtwert über die gesamte Laufzeit des Applikationsprozesses oder alternativ oder zusätzlich als zeitlich fein aufgelöster Momentanwert bzw. als Messreihe bestimmt werden. Dies betrifft beispielsweise den Gesamtspeicherbedarf des Applikationsprozesses oder den momentanen Speicherbedarf des Applikationsprozesses zu einem bestimmten Zeitpunkt, der z.B. der Ausführung eines bestimmten Programmteils der Softwareapplikation entspricht.

Ein weiterer, das Laufzeitverhalten der Softwareapplikation definierender Messwert ist die Latenzzeit des Applikationsprozesses, der zwischen einem an den Applikationsprozess gesendeten Anfragekommando und einem von dem Applikationsprozess zurückgesendeten Antwortkommando auf das Anfragekommando vergeht. Die Latenzzeit kann dementsprechend als ein den Ressourcenverbrauch des Applikationsprozesses betreffender Messwert von der Prüfeinrichtung des Datenträgers oder der externen Prüfvorrichtung gemessen werden. Dementsprechend werden die Anfragekommandos von der Prüfeinrichtung des Datenträgers oder von der externen Prüfvorrichtung über entsprechende Schnittstellen an den Datenträger und den Applikationsprozess gesendet.

Bevorzugt wird eine Folge von Latenzzeiten, insbesondere aufeinander folgender Latenzzeiten, gemessen, die von einer Folge von an den Applikationsprozess gesendeter Anfragekommandos, insbesondere aufeinander folgenden Anfragekommandos, verursacht werden. Anhand einer Folge solcher Messwerte kann die Softwareapplikation z.B. wiederholt geprüft und mit entsprechend hoher Sicherheit als echt oder nicht echt bestimmt werden.

Der Stromverbrauch des Datenträgers, der aufgrund des ausgeführten Applikationsprozesses erfolgt, kann als Gesamtstromverbrauch über die gesamte Laufzeit des Applikationsprozesses gemessen werden. Bevorzugt werden aber alternativ oder zusätzlich Veränderungen des Stromverbrauchs während der Laufzeit des Applikationsprozesses gemessen, die durch den Applikationsprozess hervorgerufen werden.

Die Prüfeinrichtung des Datenträgers ist dementsprechend eingerichtet, Messwerte der vorstehend beschriebenen Art zu bestimmen. Dabei ist zu beachten, dass z.B. in Anbetracht der beschränkten Ressourcen des Datenträgers bestimmte Messwerte, z.B. Messungen des Stromverbrauchs des Datenträgers, durch die Prüfeinrichtung möglicherweise nicht effektiv bestimmbar sind. Andere Messwerte, z.B. jene, die die Laufzeiten oder Latenzzeiten des Applikationsprozesses betreffen, können mittels einer Prüfeinrichtung auf kostengünstig herzustellenden Datenträgern, z.B. mit Hilfe eines Zeitgeberbausteins, effizient bestimmt werden.

Der zumindest eine Referenzwert, mit dem der zumindest eine Messwert verglichen wird, um die Echtheit der Softwareapplikation nachzuweisen, kann einen Referenzressourcenverbrauch eines einer Referenzsoftwareapplikation entsprechenden Referenzapplikationsprozesses betreffen. Das heißt, bei dem Verfahren zur Echtheitsprüfung der Softwareapplikation wird in einem vorgelagerten Schritt der zumindest eine Referenzwert als Referenzressourcenverbrauch des Referenzapplikationsprozesses bei der Ausführung der Referenzsoftware als Referenzapplikationsprozess auf einem Referenzdatenträger bestimmt. Vorzugsweise erfolgt dieser Schritt einmalig nach Fertigstellung der Referenzsoftware und der bestimmte Referenzwert wird an geeigneter Stelle für zukünftige Echtheitsprüfungen gespeichert. Insbesondere kann der Referenzwert in dem Datenträger mit der Prüfeinrichtung oder in der Prüfvorrichtung gespeichert sein.

Gemäß einer Ausführungsvariante der Erfindung ist die Prüfeinrichtung des Datenträgers als eine Komponente des Betriebssystemkerns des Datenträgers ausgebildet und die Softwareapplikation als Bibliotheksapplikation. Die Prüfeinrichtung kann auf diese Weise die Echtheit der dem Betriebssystem zugehörigen Bibliotheksfunktionen prüfen, und solche Funktionen, die sie als nicht echt erkannt hat, beispielsweise deaktivieren. Als Referenzwerte sind in dem Datenträger z.B. die Latenzzeiten der entsprechenden Referenzbibliotheksfunktionen gespeichert. Die Prüfeinrichtung kann also bei jedem Aufrufen einer Bibliotheksfunktion die entstehende Latenzzeit mit der gespeicherten Referenzlatenzzeit vergleichen.

Die Softwareapplikation ist derart eingerichtet dass der entsprechende Applikationsprozess beim Ausführen der Softwareapplikation auf dem Prozessor des Datenträgers mittels des Ressourcenverbrauchs eine die Softwareapplikation identifizierende Echtheitsinformation kodiert. Beim Auswerten des zumindest einen Messwertes wird dann die mittels des Ressourcenverbrauchs kodierte Echtheitsinformation dekodiert. In diesem Fall entspricht der Referenzwert der Echtheitsinformation und nicht einem Referenzressourcenverbrauch eines Referenzdatenträgers und kann insofern in einem vorgelagerten Schritt nahezu beliebig und ohne eine Referenzmessung festgelegt werden. Die Echtheitsinformation kann mittels eines bekannten oder geheimen Kodierungsverfahrens kodiert sein. Zum Kodieren einer solchen Echtheitsinformation mittels des Ressourcenverbrauchs kann der Applikationsprozess beispielsweise aufeinander folgende Latenzzeiten verwenden, deren scheinbar zufällige Abweichungen von einem bekannten Mittelwert die Echtheitsinformation kodieren. Es ist auch möglich, mittels einer gezielten, beispielsweise im Takt eines Morse-Codes gesteuerten Veränderung des Stromverbrauchs des Datenträgers, z.B. durch ein entsprechendes Ein- und Ausschalten eines Koprozessors des Datenträgers durch den Applikationsprozess, eine Echtheitsinformation zu kodieren.

Bei einer zweiten bevorzugten Ausführungsform umfasst ein erfindungsgemäßer Datenträger - wie in der ersten Ausführungsform - einen Prozessor, einen nichtflüchtigen Speicher und eine in dem Speicher gespeicherte Softwareapplikation, die auf dem Prozessor als entsprechender Applikationsprozess ausführbar ist. Im Gegensatz zur ersten Ausführungsform umfasst der Datenträger gemäß der zweiten Ausführungsform nicht notwendigerweise eine eigene Prüfeinrichtung, sondern zeichnet sich dadurch aus, dass die Softwareapplikation des Datenträgers derart eingerichtet ist, dass der entsprechende Applikationsprozess bei der Ausführung der Softwareapplikation einen Ressourcenverbrauch aufweist, der eine Echtheitsinformation in der vorstehend beschriebenen Weise kodiert. Eine derartige Softwareapplikation ist besonders einfach auf Echtheit zu prüfen, da der vorstehend beschriebene Schritt des Bestimmens des Referenzressourcenverbrauchs entfallen und als Referenzwert die Echtheitsinformation benutzt werden kann. Dabei ist die Softwareapplikation vorzugsweise derart eingerichtet, dass der Ressourcenverbrauch, der die Echtheitsinformation kodiert, zweckmäßigerweise durch zumindest einen Messwert bestimmbar ist, der mit zumindest einem Referenzwert im Wesentlichen übereinstimmt. Der zumindest eine Messwert kann eine oder mehrere der vorstehend beschriebenen Ressourcen betreffen, also insbesondere den Stromverbrauch des Datenträgers aufgrund der Ausführung der Softwareapplikation als Applikationsprozess auf dem Prozessor des Datenträgers, Speicherverbrauch, Latenzzeiten und Laufzeit des Applikationsprozesses.

Wie bei der ersten Ausführungsform kann auch der Datenträger der zweiten Ausführungsform eine Prüfeinrichtung umfassen. Die Prüfeinrichtung kann auf verschiedene Weise ausgebildet und mit verschiedenen Funktionalitäten ausgestattet sein. Die Prüfeinrichtung ist z.B. eingerichtet, den zumindest einen Messwert bei der Ausführung der Softwareapplikation durch den Prozessor des Datenträgers als Applikationsprozess zu bestimmen. Das Auswerten des zumindest einen Messwertes kann dann beispielsweise mittels der externen Prüfvorrichtung erfolgen.

Ebenso kann die Prüfeinrichtung eingerichtet sein, die Echtheit der Softwareapplikation zu prüfen, indem sie prüft, ob der zumindest eine Messwert, welcher den Ressourcenverbrauch des Applikationsprozesses betrifft und welcher die Echtheitsinformation kodiert, mit zumindest einem in dem Datenträger gespeicherten Referenzwert im Wesentlichen übereinstimmt. Dabei betrifft der gespeicherte Referenzwert ebenfalls die Echtheitsinformation.

Die vorliegende Erfindung wird im Folgenden mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: Schritte eines Verfahrens zum Bestimmen von Referenzwerten zu einer Referenzsoftware;
- Figur 3: Schritte einer bevorzugten Ausführungsform des erfindungsgemäßen Verfahrens zum Prüfen einer Testsoftware auf Echtheit;
- Figur 4A: schematisch eine mittels Latenzzeiten kodierte Echtheitsinformation; und
- Figur 4B: die Echtheitsinformation aus Figur 4A, kodiert mittels Veränderungen des Stromverbrauchs.

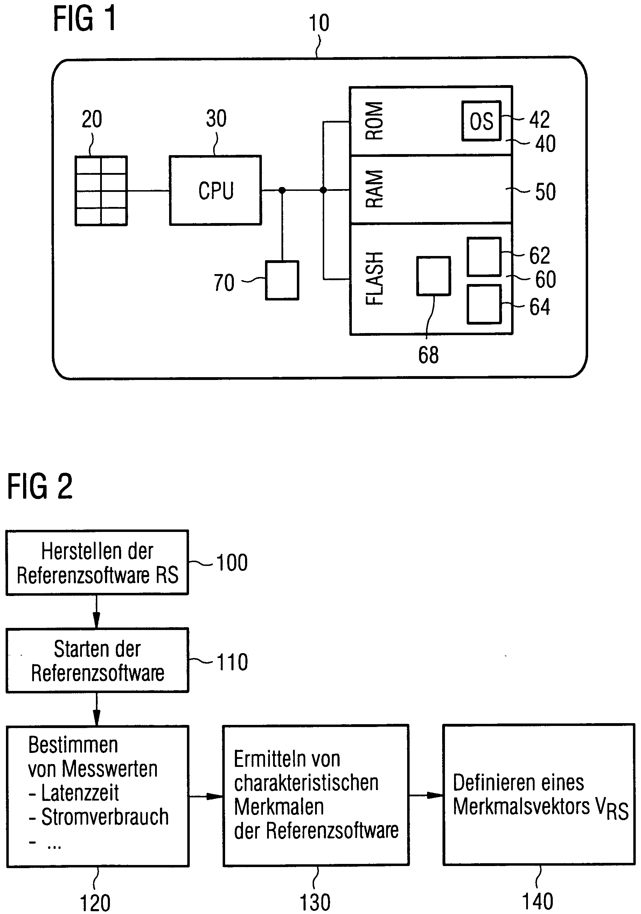

Mit Bezug auf Figur 1 umfasst ein Datenträger 10, der hier als Chipkarte dargestellt ist, eine Kommunikationsschnittstelle 20, einen Prozessor (CPU) 30 und eine Reihe von Speichern 40, 50 und 60. Die Kommunikationsschnittstelle 20 ist als Kontaktfeld gemäß ISO/IEC 7816 ausgebildet und dient dem Datenträger zur Kommunikation mit externen Geräten, z.B. mit einen Personal Computer über ein Kartenlesegerät oder mit einem Chipkartenterminal. Die Kommunikationsschnittstelle 20 kann auch nach einem anderen Standard, z.B. dem USB- oder SD-Standard, oder proprietär ausgebildet sein. Es ist gleichfalls möglich, dass der Datenträger 10 alternativ oder zusätzlich eine Kontaktlos-Kommunikationsschnittstelle (nicht gezeigt), z.B. eine Antennenspule, umfasst.

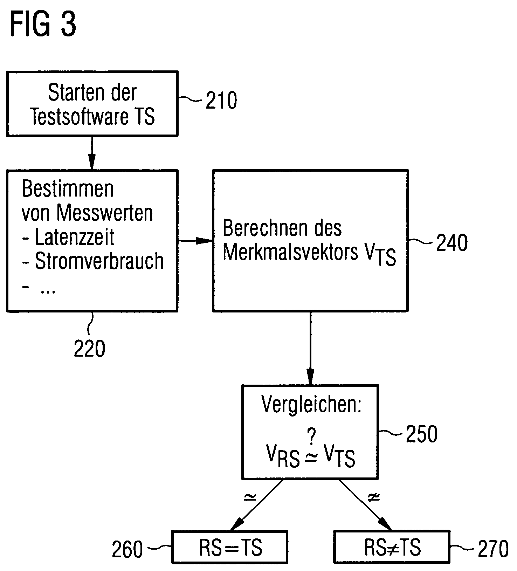

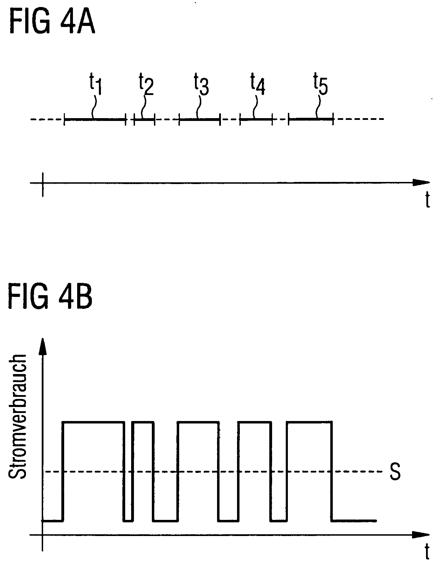

In einem nichtflüchtigen, nicht wiederbeschreibbaren ROM-Speicher 40 ist ein den Datenträger 10 steuerndes Betriebssystem (OS) 42 gespeichert. Ein flüchtiger, wiederbeschreibbarer RAM-Speicher 50 dient als Arbeitsspeicher und ein nichtflüchtiger, wiederbeschreibbarer Flash-Speicher 60 dient zum Speichern von Daten und Applikationen, z. B. einer Softwareapplikation 62, einer Prüfapplikation 64 und von Referenzdaten 68, welche jeweils nachfolgend mit Bezug auf die Figuren 3 und 4 genauer beschrieben werden. Es ist möglich, das Betriebssystem 42 oder Teile davon in dem Flash-Speicher 60 zu speichern, der alternativ auch als EEPROM-Speicher ausgebildet sein kann.

Der Datenträger 10 verfügt über keine eigene Energieversorgung, sondern wird über die Kommunikationsschnittstelle 20 bei einer Datenkommunikation von außen mit Energie versorgt. Es sind jedoch auch Datenträger möglich, die eine Batterie oder dergleichen zur Energieversorgung umfassen.

Ein Zeitgeber 70 stellt Funktionalitäten zur Zeitmessung bereit, beispielsweise zum Bestimmen der Latenzzeit einer Applikation, also der Zeit, die zwischen dem Senden eines Anfragekommandos an die Applikation und dem Empfangen eines Antwortkommandos von der Applikation vergeht.

Fig. 2 zeigt schematisch Schritte eines Verfahrens zum Definieren eines Merkmalsvektors V_{RS}, der eine in Schritt 100 hergestellte Referenzsoftware RS charakterisiert. Die Referenzsoftware RS wird auf einem Referenzdatenträger, der dem mit Bezug auf Figur 1 beschriebenen Datenträger 10 entspricht, gespeichert und in Schritt 110 unter definierten Bedingungen auf einem Prozessor des Referenzdatenträgers als ein Referenzapplikationsprozess gestartet. Der Referenzdatenträger wird hierzu mit einer externen Prüfvorrichtung über eine Kommunikationsschnittstelle des Referenzdatenträgers verbunden. Die externe Prüfvorrichtung kann ein Kartenlesegerät, ein mit einem Lesegerät verbundener Personal Computer (PC), ein Chipkartenterminal oder dergleichen sein. Die Prüfvorrichtung umfasst eine Steuerapplikation, die das Starten der Referenzsoftware auf dem Referenzdatenträger durch ein an den Referenzdatenträger gesendetes Startsignal veranlasst. Weiterhin umfasst die Prüfvorrichtung Messvorrichtungen zum Messen der verschiedenen Ressourcen des Referenzdatenträgers. Diese Messvorrichtungen können Softwareapplikationen sein, aber auch eigene Hardwarebausteine, die jeweils gegebenenfalls durch geeignete Steuersoftware unterstützt werden.

In Schritt 120 werden mittels der Prüfvorrichtung Messwerte bestimmt, die den Ressourcenverbrauch der als Referenzapplikationsprozess gestarteten Referenzsoftware RS betreffen. Die Messwerte können sowohl das Laufzeitverhalten des Referenzapplikationsprozesses betreffen als auch den Stromverbrauch des Referenzdatenträgers während der Laufzeit des Referenzapplikationsprozesses. Es werden Speicherbedarf, Laufzeit, Latenzzeiten und dergleichen für den Referenzapplikationsprozess bzw. seine Parallel- und abhängigen Prozesse gemessen und in der Prüfvorrichtung protokolliert. Ist die Referenzsoftware RS z.B. ein Chipkartenbetriebssystem, so können die Latenzzeiten bezüglich aller Kommandos, die ein Chipkartenterminal an die Karte senden kann, gemessen werden, wie auch das Zeitverhalten bei Dateizugriffen und bei Routinen, die das jeweilige Kommunikationsprotokoll implementieren. Der Stromverbrauch des Referenzdatenträgers und seine Veränderung während der Laufzeit wird sowohl zeitlich fein aufgelöst für jedes einzelne Kommando wie auch über die gesamte Laufzeit gemessen. Ist die Referenzsoftware RS eine Anwendung, die verschiedene Eingaben verarbeiten kann, so werden Messwerte bezüglich Laufzeit und Stromverbrauch über sämtliche möglichen Eingaben gemessen. Weitere Messungen, die den Ressourcenverbrauch der Referenzsoftware RS betreffen, können angestellt werden.

In Schritt 130 werden aus den im vorherigen Schritt gemessenen Messwerten solche Merkmale ausgewählt, die geeignet sind, die Referenzsoftware RS zu charakterisieren und gegenüber anderen, ähnlichen Softwareprodukten zu unterscheiden. Solche Merkmale können aus einzelnen Messwerten, aber auch aus einer Kombination verschiedener Messwerte gebildet werden. Kombinationen vom Messwerten sind beispielsweise Verhältnisse von Messwerten zueinander, Folgen oder Tupel von Messwerten und dergleichen. Es können auch beliebige logische oder mathematische Verknüpfungen von Messwerten als Merkmale herangezogen werden. Die Merkmale können dabei sowohl einen Ressourcenverbrauch betreffen, der sich über die gesamte Laufzeit des Referenzapplikationsprozesses erstreckt, als auch Messwerte, die sich durch eine zeitlich fein aufgelöste Analyse des Ressourcenverbrauchs ergeben, indem z.B. Schwankungen oder Veränderungen des entsprechenden Ressourcenverbrauchs während der Laufzeit des Referenzapplikationsprozesses als ein Merkmal herangezogen werden.

Die ermittelten charakteristischen Merkmale werden in Schritt 140 zu dem Merkmalsvektor V_{RS} zusammengefasst. Es ist dabei darauf zu achten, dass die Merkmale im Wesentlichen von der Referenzsoftware RS selbst und nicht von dem Referenzdatenträger und seiner Hardware, auf dem sie ausgeführt wird, abhängen. Bei solchen Merkmalen, die zumindest teilweise von dem Referenzdatenträger abhängen, können die entsprechenden Referenzdatenträgerparameter, wie z.B. seine interne Taktfrequenz, seine Betriebsspannung und dergleichen, in den Merkmalsvektor V_{RS} als Information mit aufgenommen werden.

Umfasst die Referenzsoftware RS mehrere Komponenten, wie dies z.B. für ein Java-Chipkartenbetriebsystem der Fall ist, kann die Aufteilung des Merkmalsvektors V_{RS} diese Komponenten widerspiegeln. Ein erster Bereich des Merkmalsvektors V_{RS} kann Merkmale enthalten, die Kommandos betreffen, die von der Chiphardware abhängen, z.B. von der Benutzung eines Koprozessors. Ein zweiter Bereich betrifft dann z.B. Merkmale in Verbindung mit Kommandos des Betriebssystemkerns und ein dritter Bereich Merkmale solcher Kommandos, die Applets betreffen. Der in der vorstehend beschriebenen Weise definierte Merkmalsvektor V_{RS} dient nun als Referenzvektor bzw. Referenzwert für die Referenzsoftware RS und kann zum Prüfen einer Software auf Echtheit herangezogen werden, wie es nachfolgend mit Bezug auf Figur 3 beschrieben wird.

Liegt ein Datenträger vor, auf dem eine Testsoftware TS gespeichert ist, für die geprüft werden soll, ob es sich dabei um eine Kopie der Referenzsoftware RS handelt, wird wie folgt vorgegangen.

In Schritt 210 wird die Testsoftware TS unter den gleichen Bedingungen wie zuvor die Referenzsoftware RS mittels der Steuerapplikation der Prüfvorrichtung als ein Testapplikationsprozess auf einem Prozessor des vorliegenden Datenträgers gestartet und es werden in Schritt 220 diejenigen Messwerte bezüglich des Ressourcenverbrauch des Testapplikationsprozesses bestimmt, die in Schritt 130 im Zusammenhang mit der Referenzsoftware RS als diejenigen erkannt worden sind, die geeignet waren, die Referenzsoftware RS zu charakterisieren. Schließlich wird mittels dieser Messwerte ein Merkmalsvektor V_{TS} in der Weise berechnet, wie zuvor der Merkmalsvektor V_{RS} berechnet worden ist. In dem Merkmalsvektor V_{TS} werden also genau die gleichen Messwerte bezüglich der gleichen Ressourcen verarbeitet wie zuvor in dem Merkmalsvektor V_{RS}.

Daher können in Schritt 250 die beiden Merkmalsvektoren V_{RS} und V_{TS} verglichen werden, um festzustellen, ob die Testsoftware TS eine Kopie der Referenzsoftware RS darstellt oder nicht. Beim Vergleichen der beiden Merkmalsvektoren können eventuell bestehende Unterschiede der beiden Datenträger, auf denen die Referenzsoftware RS bzw. die Testsoftware TS ausgeführt worden sind, berücksichtigt werden, indem z.B. nicht absolute Werte verglichen werden, sondern entsprechende Verhältnisse von Werten oder dergleichen. Stimmen die Merkmalsvektoren V_{RS} und V_{TS} in geeignetem Sinne überein - wie in Schritt 260 dargestellt - so kann mit relativ hoher Wahrscheinlichkeit davon ausgegangen werden, dass die Testsoftware TS eine Kopie der Referenzsoftware RS darstellt, die Testsoftware also als "echt" angesehen wird. Denn zur Definition des Merkmalsvektors V_{RS} sind gerade die Messwerte herangezogen worden, die einen Ressourcenverbrauch des Referenzapplikationsprozesses beschreiben, der die Referenzsoftware RS charakterisiert. Ist der Merkmalsvektor V_{RS}, wie vorstehend beschrieben, bezüglich verschiedener Komponenten gegliedert, so kann z.B. einfach festgestellt werden, wenn einzelne Komponenten der Testsoftware TS Kopien entsprechender Komponenten der Referenzsoftware RS darstellen, wenn nämlich die entsprechenden Bereiche der jeweiligen Merkmalsvektoren übereinstimmen, ohne dass eine vollständige Übereinstimmung der gesamten Merkmalsvektoren besteht. Im verbleibenden Fall, wenn die Merkmalsvektoren also überall hinreichend verschieden sind - wie in Schritt 270 dargestellt - kann davon ausgegangen werden, dass sich die Testsoftware TS wesentlich von der Referenzsoftware RS unterscheidet und keine Kopie derselben darstellt, auch nicht in Teilen.

Bei dem vorstehend beschriebenen Verfahren zum Prüfen der Testsoftware TS wird das Bestimmen der Messwerte in Schritt 220, wie beschrieben, außerhalb des Datenträgers, auf dem die Software TS ausgeführt wird, mittels der Prüfvorrichtung vorgenommen. Es ist aber auch möglich, dass Messwerte, die den Ressourcenverbrauch einer auf einem portablen Datenträger gespeicherten und ausführbaren Softwareapplikation betreffen, in dem Datenträger selbst und mittels einer Prüfeinrichtung des Datenträgers gemessen werden.

Die vorstehend mit Bezug auf Figur 1 genannte Prüfapplikation 64 ermöglicht eine Echtheitsprüfung von Software, die in dem Datenträger 10 ausgeführt wird, in dem Datenträger 10 selbst. Dazu ist die Prüfapplikation 64 eingerichtet, Messwerte bezüglich des Ressourcenverbrauchs einer auf dem Datenträger 10 als Applikationsprozess ausgeführten Applikation, beispielsweise der Softwareapplikation 62, zu messen und mit Referenzwerten, die in Form der Referenzdaten 68 in dem Datenträger 10 gespeichert sind, zu vergleichen. Die Prüfapplikation 64 kann durch geeignete Hardwarebauteile, wie z.B. den Zeitgeber 70, unterstützt werden. Die Referenzwerte sind dabei in einer Weise bestimmt worden, wie es mit Bezug auf Figur 2 beschrieben worden ist. Dabei ist zu beachten, dass aufgrund der begrenzten Ressourcen des Datenträgers 10 zum Bilden der Referenzwerte vorzugsweise solche Messwerte bestimmt werden, die innerhalb des Datenträgers 10 und unter Berücksichtigung seiner begrenzten Ressourcen auf effiziente Weise bestimmt werden können.

In einer bevorzugten Ausführungsform bildet die Prüfapplikation 64 eine Komponente des Kerns des Betriebssystems 42 und ist eingerichtet, mittels des Zeitgebers 70 das Laufzeitverhalten der dem Betriebssystem 42 zugehörigen Bibliotheksfunktionen (genauer: der entsprechenden Prozesse) zu prüfen. Referenzwerte, die das Laufzeitverhalten von zu dem Betriebssystem 42 zugehörigen Bibliotheksfunktionen beschreiben, sind dazu in den Referenzdaten 68 gespeichert. Wird eine Bibliotheksfunktion erkannt, deren Laufzeitverhalten von dem in den Referenzdaten 68 gespeicherten abweicht, kann der Betriebssystemkern auf Veranlassung der Prüfapplikation 64 diese Funktion beispielsweise deaktivieren.

Um ein Prüfen der Softwareapplikation 62 zu erleichtern, kann diese eingerichtet sein, mittels des Ressourcenverbrauchs ihres entsprechenden Applikationsprozesses eine spezifische Echtheitsinformation zu kodieren. Figur 4A zeigt schematisch eine Folge von Latenzzeiten t1, t2, t3, t4, t5, die sich bestimmen lässt, wenn der Applikationsprozess auf entsprechende aufeinander folgende Kommandos antwortet. Die Länge der Latenzzeiten dient zum Kodieren der Echtheitsinformation. Bei dem Verfahren zum Prüfen der Softwareapplikation 62 werden die als Messwerte bestimmten Latenzzeiten beim Auswerten mittels eines vorgegebenen Verfahrens dekodiert und mit gespeicherten Referenzdaten 68 verglichen. In Figur 4B ist dieselbe Echtheitsinformation mittels der Veränderung des Stromverbrauchs des Datenträgers 10 während der Laufzeit des der Softwareapplikation 62 entsprechenden Applikationsprozesses kodiert. Den vorstehend genannten Latenzzeiten t1 bis t5 entsprechen hier Zeitspannen, während derer der Stromverbrauch des Datenträgers 10 eine vorgegebene Schwelle S übersteigt. Eine solche Echtheitsinformation kann beispielsweise durch den gezielten Einsatz eines Koprozessors (in Fig. 1 nicht gezeigt) durch die Softwareapplikation 62 kodiert werden.

Die Echtheitsinformation kann dabei in einer Weise kodiert werden, die die Dekodierung vereinfacht, indem der Koprozessor z.B. durch den Applikationsprozess in der Art eines Morse-Codes ein- und ausgeschaltet wird, um z.B. die Anfangsbuchstaben des Software-Herstellers zu kodieren. Es ist auch möglich, die Echtheitsinformation in einer Weise zu kodieren, die für Dritte ohne Hilfe eines vorgegebenen, vorzugsweise geheimen Dekodierschemas nicht zu dekodieren ist. Dabei können die vorstehend beschriebenen, aufeinander folgenden Latenzzeiten t1 bis t5 für einen Dritten wie zufällig von einem Mittelwert abweichende Latenzzeiten aussehen, wobei genau in den scheinbar zufälligen Abweichungen von dem Mittelwert die Echtheitsinformation kodiert ist. In beiden Fällen ist eine zeitlich fein aufgelöste Analyse des jeweiligen Ressourcenverbrauchs notwendig, um die Echtheitsinformation als solche zu erkennen und dekodieren zu können.

## Patentansprüche

1. Verfahren zur Prüfung einer Softwareapplikation (62), umfassend ein Ausführen (210) der Softwareapplikation (62) als Applikationsprozess auf einem Prozessor (30) eines portablen Datenträgers (10), mit folgenden Teilschritten im Rahmen der Prüfung:
- Bestimmen (220) von zumindest einem Messwert, der einen Ressourcenverbrauch des Applikationsprozesses betrifft; und
- Auswerten (250) des zumindest einen Messwerts;
**dadurch gekennzeichnet, dass**
die Prüfung in einer externen Prüfeinrichtung erfolgt;
die Prüfung als Echtheitsprüfung für die auf dem Datenträger (10) gespeicherte Softwareapplikation (62) erfolgt;
die Softwareapplikation (62) derart eingerichtet ist, dass der Applikationsprozess beim Ausführen auf dem Prozessor (30) einen Ressourcenverbrauch aufweist, der eine Echtheitsinformation der Softwareapplikation (62) kodiert; und beim Auswerten des zumindest einen Messwerts die durch den Ressourcenverbrauch des Applikationsprozesses kodierte Echtheitsinformation der Softwareapplikation (62) dekodiert wird.

2. Verfahren nach Anspruch 1, **dadurch gekennzeichnet, dass** zumindest ein Messwert bestimmt wird, der das Laufzeitverhalten des Applikationsprozesses betrifft.

3. Verfahren nach Anspruch 2, **dadurch gekennzeichnet, dass** der zumindest eine Messwert eine Latenzzeit des Applikationsprozesses betrifft, die zwischen einem an den Applikationsprozess gesendeten Anfragekommando und einem von dem Applikationsprozess zurückgesendeten Antwortkommando auf das Anfragekommando vergeht.

4. Verfahren nach Anspruch 3, **dadurch gekennzeichnet, dass** eine Folge von Messwerten bestimmt wird, die Latenzzeiten einer Folge von an den Applikationsprozess gesendeter Anfragekommandos betreffen.

5. Verfahren nach einem der Ansprüche 1 bis 4, **dadurch gekennzeichnet, dass** zumindest ein Messwert bestimmt wird, der den Stromverbrauch des Datenträgers (10) beim Ausführen des Applikationsprozesses auf dem Prozessor (30) betrifft.

6. Verfahren nach einem der Ansprüche 1 bis 5, **dadurch gekennzeichnet, dass** Messwerte bestimmt werden, die eine Veränderung des Stromverbrauchs des Datenträgers (10) beim Ausführen des Applikationsprozesses auf dem Prozessor (30) betreffen.

7. Portabler Datenträger (10), umfassend einen Prozessor (30), einen nichtflüchtigen Speicher (60) und eine in dem Speicher (60) gespeicherte Softwareapplikation (62), die auf dem Prozessor (30) als Applikationsprozess ausführbar ist, wobei der Applikationsprozess bei der Ausführung der Softwareapplikation (62) auf dem Prozessor (30) einen Ressourcenverbrauch aufweist, **dadurch gekennzeichnet, dass** die Softwareapplikation (62) derart eingerichtet ist, dass der Applikationsprozess bei der Ausführung der Softwareapplikation (62) auf dem Prozessor (30) mittels des Ressourcenverbrauchs eine die Softwareapplikation (62) identifizierende Echtheitsinformation kodiert; und
die Softwareapplikation (62) derart eingerichtet ist, dass der Ressourcenverbrauch des Applikationsprozesses durch zumindest einen, von einer externen Prüfeinrichtung gemessenen, Messwert bestimmbar ist, wobei beim Auswerten des zumindest einen Messwertes die mittels des Ressourcenverbrauches kodierte Echtheitsinformation dekodiert werden kann.

8. Datenträger (10) nach Anspruch 7, **dadurch gekennzeichnet, dass** die Softwareapplikation (62) derart eingerichtet ist, dass der Ressourcenverbrauch des Applikationsprozesses durch zumindest einen Messwert gemäß einem der Ansprüche 2 bis 6 bestimmbar ist.

9. System mit einem portablen Datenträger nach einem der Ansprüche 7 oder 8 sowie einer Prüfvorrichtung zur Echtheitsprüfung einer auf dem portablen Datenträger (10) gespeicherten Softwareapplikation (62), umfassend eine Kommunikationsschnittstelle zur Datenkommunikation mit dem Datenträger (10) und einer Steuerapplikation zum Starten der Softwareapplikation (62) als einen auf dem Prozessor (30) des Datenträgers (10) ausgeführten Applikationsprozess, wobei die Prüfvorrichtung eingerichtet ist, zumindest einen Messwert zu bestimmen, welcher den Ressourcenverbrauch des Applikationsprozesses bei der Ausführung der Softwareapplikation (62) betrifft, und den zumindest einen Messwert auszuwerten,
wobei beim Auswerten des zumindest einen Messwerts eine durch den Ressourcenverbrauch des Applikationsprozesses kodierte Echtheitsinformation der Softwareapplikation (62) dekodiert wird.

10. System nach Anspruch 9, **dadurch gekennzeichnet, dass** die Prüfvorrichtung eingerichtet ist, die Echtheit der Softwareapplikation (62) gemäß einem Verfahren nach einem der Ansprüche 2 bis 6 zu prüfen.

## Claims

1. A method for checking a software application (62), comprising an execution (210) of the software application (62) as an application process on a processor (30) of a portable data carrier (10), with the following partial steps within the framework of the check:
- determining (220) at least one measured value which relates to a resource consumption of the application process; and
- evaluating (250) the at least one measured value;
**characterized in that**
the check is effected in an external checking device;
the check is effected as an authenticity check for the software application (62) stored on the data carrier (10);
the software application (62) is adapted such that the application process, when being executed on the processor (30), has a resource consumption that encodes an authenticity information item of the software application (62); and when the at least one measured value is evaluated, the authenticity information of the software application (62) encoded by the resource consumption of the application process is decoded.

2. The method according to claim 1, **characterized in that** at least one measured value is determined, which relates to the runtime behavior of the application process.

3. The method according to claim 2, **characterized in that** the at least one measured value relates to a latency time of the application process that passes between a request command sent to the application process and a response command to the request command returned by the application process.

4. The method according to claim 3, **characterized in that** a series of measured values is determined that relate to the latency times of a series of request commands sent to the application process.

5. The method according to any of the claims 1 to 4, **characterized in that** at least one measured value is determined which relates to the power consumption of the data carrier (10) when executing the application process on the processor (30).

6. The method according to any of the claims 1 to 5, **characterized in that** measured values are determined which relate to a change in the power consumption of the data carrier (10) when executing the application process on the processor (30).

7. A portable data carrier (10) comprising a processor (30), a non-volatile memory (60) and a software application (62) stored in the memory (60), which is executable as an application process on the processor (30), wherein the application process when executing the software application (62) on the processor (30) has a resource consumption, **characterized in that** that the software application (62) is adapted such that, when the software application (62) is executed on the processor (30), the application process encodes by means of the resource consumption an authenticity information item identifying the software application (62); and
the software application (62) is adapted such that the resource consumption of the application process can be determined by at least one measured value measured by an external checking device, wherein, when the at least one measured value is evaluated, the authenticity information item encoded by means of the resource consumption can be decoded.

8. The data carrier (10) according to claim 7, **characterized in that** the software application (62) is adapted such that the resource consumption of the application process can be determined by at least one measured value according to any of the claims 2 to 6.

9. A system with a portable data carrier according to any of the claims 7 or 8 and a checking apparatus for checking the authenticity of a software application (62) stored on the portable data carrier (10), comprising a communication interface for data communication with the data carrier (10) and a control application for starting the software application (62) as an application process executed on the processor (30) of the data carrier (10), wherein the checking apparatus is adapted to determine at least one measured value which relates to the resource consumption of the application process when the software application (62) is executed, and to evaluate the at least one measured value, wherein, when the at least one measured value is evaluated, an authenticity information item of the software application (62) encoded by the resource consumption of the application process is decoded.

10. The system according to claim 9, **characterized in that** the checking apparatus is adapted to verify the authenticity of the software application (62) in accordance with a method according to any of the claims 2 to 6.

## Revendications

1. Procédé de vérification d'une application logicielle (62), comprenant une exécution (210) de l'application logicielle (62) en tant que processus d'application sur un processeur (30) d'un support de données portable (10), comportant les étapes partielles suivantes dans le cadre de la vérification:
- détermination (220) d'au moins une valeur de mesure concernant une consommation de ressources par le processus d'application; et
- évaluation (250) de la au moins une valeur de mesure;
**caractérisé en ce que**
la vérification a lieu dans un équipement externe de vérification;
la vérification a lieu en tant que vérification d'authenticité de l'application logicielle (62) mémorisée sur le support de données (10);
l'application logicielle (62) est configurée de telle façon que le processus d'application présente, durant l'exécution sur le processeur (30), une consommation de ressources qui code une information d'authenticité de l'application logicielle (62);
et, lors de l'évaluation de la au moins une valeur de mesure, l'information d'authenticité de l'application logicielle (62) codée par le biais de la consommation de ressources par le processus d'application est décodée.

2. Procédé selon la revendication 1, **caractérisé en ce qu'**au moins une valeur de mesure concernant le comportement du processus d'application durant son exécution est déterminée.

3. Procédé selon la revendication 2, **caractérisé en ce que** la au moins une valeur de mesure concerne un temps de latence du processus d'application qui s'écoule entre un ordre d'interrogation envoyé au processus d'application et un ordre de réponse renvoyé par le processus d'application à la suite de l'ordre d'interrogation.

4. Procédé selon la revendication 3, **caractérisé en ce qu'**une séquence de valeurs de mesure concernant les temps de latence d'une séquence d'ordres d'interrogation envoyés au processus d'application est déterminée.

5. Procédé selon une des revendications de 1 à 4, **caractérisé en ce qu'**au moins une valeur de mesure concernant la consommation d'énergie par le support de données (10) durant l'exécution du processus d'application sur le processeur (30) est déterminée.

6. Procédé selon une des revendications de 1 à 5, **caractérisé en ce que** des valeurs de mesure concernant une modification de la consommation d'énergie par le support de données (10) durant l'exécution du processus d'application sur le processeur (30) est déterminée.

7. Support de données portable (10), comportant un processeur (30), une mémoire (60) non volatile et une application logicielle (62) qui est mémorisée dans la mémoire (60) et est exécutable sur le processeur (30) en tant que processus d'application, le processus d'application présentant, durant l'exécution de l'application logicielle (62) sur le processeur (30), une consommation de ressources, **caractérisé en ce que** l'application logicielle (62) est configurée de telle façon que le processus d'application, lors de l'exécution de l'application logicielle (62) sur le processeur (30), code au moyen de la consommation de ressources une information d'authenticité identifiant l'application logicielle (62); et
l'application logicielle (62) étant configurée de telle façon que la consommation de ressources par le processus d'application est déterminable par au moins une valeur de mesure mesurée par un équipement externe de vérification, cependant que, lors de l'évaluation de la au moins une valeur de mesure, l'information d'authenticité codée au moyen de la consommation de ressources peut être décodée.

8. Support de données (10) selon la revendication 7, **caractérisé en ce que** l'application logicielle (62) est configurée de telle façon que la consommation de ressources par le processus d'application est déterminable par au moins une valeur de mesure selon une des revendications de 2 à 6.

9. Système doté d'un support de données portable selon une des revendications 7 ou 8 ainsi qu'un dispositif de vérification destiné à la vérification d'authenticité d'une application logicielle (62) mémorisée sur le support de données (10) portable, comprenant une interface de communication pour la communication de données avec le support de données (10) et une application de commande pour le démarrage de l'application logicielle (62) en tant qu'un processus d'application exécuté sur le processeur (30) du support de données (10), le dispositif de vérification
étant configuré pour déterminer au moins une valeur de mesure concernant la consommation de ressources par le processus d'application durant l'exécution de l'application logicielle (62) et pour évaluer la au moins une valeur de mesure,
cependant que, lors de l'évaluation de la au moins une valeur de mesure, une information d'authenticité de l'application logicielle (62) codée par le biais de la consommation de ressources par le processus d'application est décodée.

10. Système selon la revendication 9, **caractérisé en ce que** le dispositif de vérification est configuré pour vérifier suivant un procédé selon une des revendications de 2 à 6 l'authenticité de l'application logicielle (62).
